(19) Europäisches Patentamt
European Patent Office
Office européen des brevets

(11) **EP 3 801 876 B1**

(12) **EUROPEAN PATENT SPECIFICATION**

(45) Date of publication and mention
of the grant of the patent:
**17.04.2024 Bulletin 2024/16**

(21) Application number: **19728968.9**

(22) Date of filing: **05.06.2019**

(51) International Patent Classification (IPC):
*B01J 20/02* (2006.01)   *F25B 15/10* (2006.01)
*F25B 27/00* (2006.01)   *F25B 30/04* (2006.01)
*F25B 30/06* (2006.01)   *F28D 20/00* (2006.01)
*F25B 17/08* (2006.01)   *B01J 20/04* (2006.01)
*B01J 20/10* (2006.01)   *B01J 20/20* (2006.01)
*B01J 20/28* (2006.01)   *B01J 20/32* (2006.01)

(52) Cooperative Patent Classification (CPC):
**B01J 20/0277; B01J 20/0288; B01J 20/0296;
B01J 20/04; B01J 20/041; B01J 20/045;
B01J 20/046; B01J 20/103; B01J 20/20;
B01J 20/28023; B01J 20/3204; B01J 20/3236;
B01J 20/3295; F25B 15/10; F25B 17/08;** (Cont.)

(86) International application number:
**PCT/EP2019/064611**

(87) International publication number:
**WO 2019/234082 (12.12.2019 Gazette 2019/50)**

(54) **SYSTEM AND METHOD FOR TRANSFERRING ENERGY**

SYSTEM UND VERFAHREN ZUR ÜBERTRAGUNG VON ENERGIE

SYSTÈME ET PROCÉDÉ DE TRANSFERT D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.06.2018 SE 1850685**

(43) Date of publication of application:
**14.04.2021 Bulletin 2021/15**

(73) Proprietor: **SaltX Technology AB
129 44 Hägersten (SE)**

(72) Inventors:
• **BOLIN, Göran
117 64 STOCKHOLM (SE)**
• **CROON, Lars
116 38 STOCKHOLM (SE)**

(74) Representative: **Ström & Gulliksson AB
Box 5275
102 46 Stockholm (SE)**

(56) References cited:
WO-A1-2016/166364    FR-A1- 2 530 298
US-A- 3 908 632

(52) Cooperative Patent Classification (CPC): (Cont.)
 **F25B 27/007; F25B 30/04; F25B 30/06;**
 **F28D 20/003;** F28D 2020/0026; Y02E 10/40;
 Y02E 60/14

**Description**

Technical field

The present invention relates generally to a system and a method for transferring energy, e.g. for collection and for storage. The system can transfer energy and store energy in a material. The system comprises use of a material with the ability to absorb and desorb a fluid and is intended to collect heat, for instance solar radiation, waste heat or heat generated by electricity. The charging and discharging involves a sorption process. During discharge heat is released and can be utilized.

Background

Chemical heat pumps, in particular chemical heat pumps working according to the sorption principle typically comprise at least one salt or another material and at least one fluid. The operation principle is based on reversible absorption and desorption of a fluid (examples include water, an alcohol, ammonia, and hydrogen) in and from a solid (such as a salt or an oxide). Absorption of the gas phase of a fluid is typically an exothermic process delivering heat, whereas desorption of the gas phase of a fluid typically is endothermic and requires energy input. The specific solid/gas couple i.e. the specific at least one salt or oxide and at least one fluid determines the temperature range in which the chemical heat pump works. The working cycle of such a chemical heat pump is often conducted in a discontinuous way with a batch cycle.

A system typically comprises a condenser/evaporator and a reactor (absorber/desorber), where both are exchanging heat with surrounding systems. Vapor and/or a gas phase of a fluid is able to flow between the reactor (absorber/desorber) and the condenser/evaporator. The gas flow between the reactor and the condenser/evaporator is often controlled so that the operation can be controlled.

When the fluid (for instance water or another substance(s)) in gas phase is absorbed in the material (typically a salt or an oxide) the active substance will at first still remain in solid phase and then in many cases as more fluid is absorbed gradually turn into liquid phase. The process when the material becomes liquid by absorption of the fluid is called liquefaction.

A chemical heat pump can be used to store energy, where energy is stored in the material for subsequent use. A chemical heat pump can also be used for both heating and cooling driven by a heat source, such as solar heat or waste heat. Further a chemical heat pump can be used in a heating device such as a boiler to increase the efficiency of the process.

Document FR2530298A1 discloses an absorption heat pump using granular absorption material.

In a system where a salt or an oxide is the material into which a fluid absorbs, the chemical heat pump can be improved by providing a matrix in which the material is held. In a chemical heat pump described in WO 2007/139476 there is described that in the reactor part a matrix is provided for the active substance so that the active substance both in its solid state and its liquid state or its solution phase is held or carried by or bonded to the matrix. The matrix is advantageously an inert material such as aluminum oxide and has pores, which are permeable for the fluid and in which the active substance is located.

WO 2012/118437 discloses a particle comprising an inner part of a salt and/or CaO and an outer coating with hydrophobic nanoparticles. It is also disclosed that the nanoparticles can comprise hydrophobically modified $SiO_2$ particles together with carbon material. Examples of carbon material include graphite and graphene and it is mentioned that carbon material can improve the heat conduction. The coating always comprise hydrophobic nanoparticles.

WO 2016/166364 discloses a chemical heat pump with storage compartments for the active material in the heat pump as well as a reaction compartment and transport means adapted to transport the active material from one storage compartment to the reaction compartment and from the reaction compartment to a second storage compartment, and back for charge and discharge respectively.

US 3,908,632 discloses an apparatus for solar heat recovery which embodies passing air or other gaseous stream with entrained black body particles from a solar heating zone to a particle separation zone such that a heated particle stream can be passed to a heat exchange zone to impart heat to water or other heat exchange medium. The resultant cooled particles are subsequently remixed with the gaseous stream being separately discharged from the particle separation zone such that a recombined stream is recirculated to the solar heating zone to provide a continuous operation. The gas stream is obtained by a pump, further the particles do not absorb and desorb a fluid.

US 2014/0338372 discloses a device where a mixture is heated in a solar panel and is then separated in a separator. The flow of mixture can be driven by a pump. There is disclosed a material which can absorb a fluid at one temperature and desorb the fluid at a second higher temperature.

The solutions according to the state of the art require a pump or another active means for transporting the material inside the energy collecting device.

Although the solutions according to the state of the art are working, it is desirable to improve the transport of active material inside an energy collection system.

Summary

It is an object of the present invention to obviate at least some of the disadvantages in the prior art and provide an improved method and system for transferring energy.

In a first aspect there is provided a method for transferring energy, said method being defined by appended independent claim 1.

In a second aspect there is provided a system as defined by appended independent claim 6.

Further embodiments are defined in the appended claims.

An advantage is that the transport of active material in the system is improved. The released fluid is utilized to create a flow of fluid, which transports the material in the form of particles. The volume expansion when the fluid desorbs is considerable, a typical volume expansion is several hundred times depending on the material, the fluid and the pressure. This released fluid is utilized to transport the material so that additional transport means such as pumps are not necessary. Thereby the transport of material in the system is improved.

Another advantage is that the heat transfer to and from the material is improved. The heat is transferred efficiently from the inside of the heated tube to the material in the tube. This is due to the powerful flow and the possibility to create turbulent flow inside the tube.

Brief description of the drawings

By way of example, embodiments of the present invention will now be described with reference to the accompanying drawings in which:

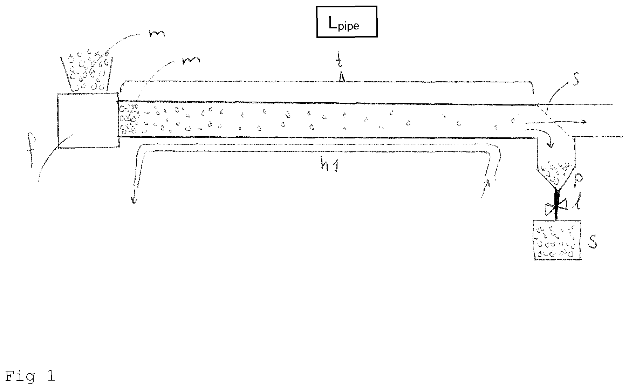

Figure 1 is a schematic drawing showing a system according to the invention, where a feeder (f) has a storage for the material (m) above. The feeder (f) feeds the material (m) into one end of the tube (t), which is heated by a heating device (h1) in this case a tube with flowing hot fluid in thermal contact with the tube (t). The tube (t) has the length $L_{pipe}$. The material is brought along the tube (t) by the flow of gas which is desorbed from the material (m) and reaches the end of the tube (t), where the separator (s) is. The material (m) is separated and falls down in a hopper (p) which is connected via a valve (1) to a storage compartment (s). The fluid in gas phase continues in the tube and can be either condensed or can escape to the surroundings.

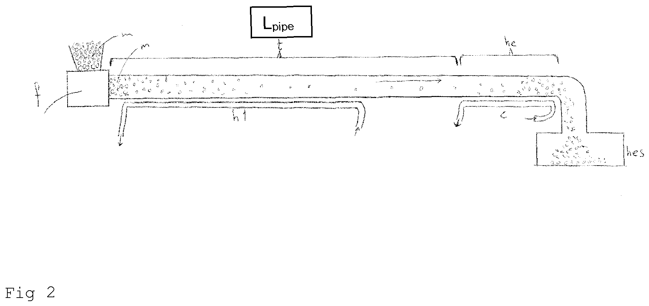

Figure 2 is a schematic drawing of a similar embodiment as in fig 1, but the separator (s) is replaced with a heat exchanger (he), which is cooled by thermal contact with a pipe (c) in which a cold cooling fluid flows. When the material and the fluid are cooled below the first temperature the fluid is again absorbed by the material and the volume is reduced. The material falls down in a storage compartment (hes) .

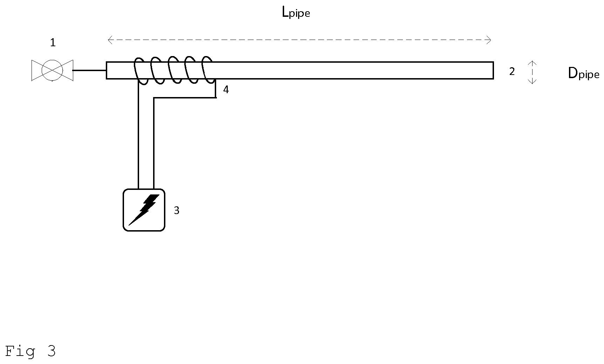

Figure 3 is a schematic drawing showing a system according to the example, where a ball valve (1) is in one end of the tube (t, 2). The tube (t, 2) has a length $L_{pipe}$ and a diameter $D_{pipe}$. In this setup the separator or heat exchanger at the exit of the tube is omitted. An induction unit (3) heats the tube (t,2) with an induction coil (4).

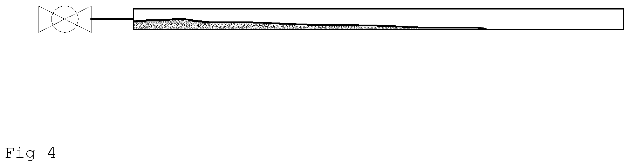

Figure 4 is a schematic drawing showing a system according to the invention, where the material(m) has been filled into the tube during a batch-wise operation mode. As can be seen the material can reach a bit into the tube before the tube is heated during the batch wise operation mode.

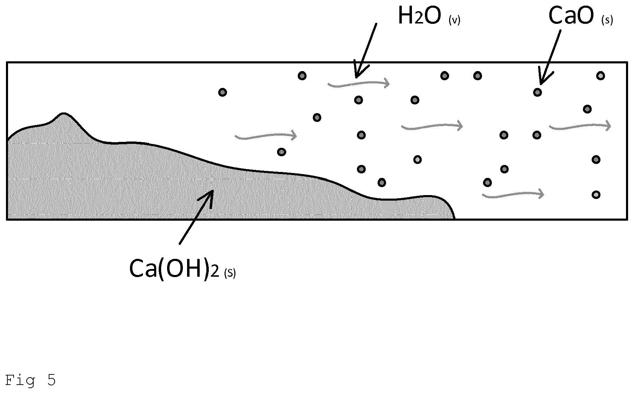

Figure 5 is a schematic drawing of the end of the tube (t) where the material (m) is filled and heated. In this particular embodiment the material is $Ca(OH)_2$ which is converted to $H_2O$ and $CaO$. When the tube reaches a certain temperature water vapour is formed. A sufficiently large part of the tube should be sufficiently warm so that there is no condensation over the walls. Then the gas (water vapour) transports solid particles comprising $CaO$. A small fraction of $Ca(OH)_2$ may be present in the outgoing flow.

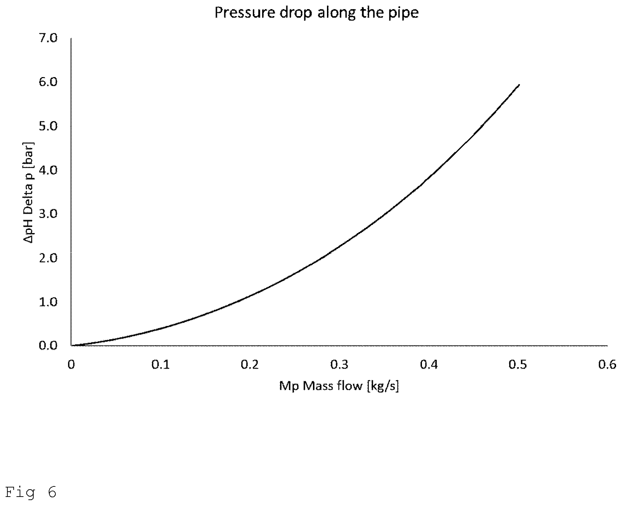

Figure 6 shows the calculated minimum pressure drop along the tube $(\Delta p_H)$ in bar as a function of the mass flow (Mp) in kg/s. The gas phase in the tube has to apply a pressure that is higher than $\Delta p_H$ in order to secure transport of solid material in the tube. All parameters in the calculation are for the experiment described in the experimental section.

Detailed description

Before the invention is disclosed and described in detail, it is to be understood that this invention is not limited to particular compounds, configurations, method steps, substrates, and material disclosed herein as such compounds, configurations, method steps, substrates, and material may vary somewhat. It is also to be understood that the terminology employed herein is used for the purpose of describing particular embodiments only and is not intended to be limiting since the scope of the present invention is limited only by the appended claims and equivalents thereof.

It must be noted that, as used in this specification and the appended claims, the singular forms "a", "an" and "the" include plural referents unless the context clearly dictates otherwise.

If nothing else is defined, any terms and scientific terminology used herein are intended to have the meanings commonly understood by those of skill in the art to which this invention pertains.

Material as used herein denotes a substance, which takes active part in the absorption process together with fluid. The material comprises at least one active substance so that the material can absorb a fluid at a second temperature and desorb the fluid at a higher first temperature. Although the active substance has this property the material comprising the active substance is used to denote a mixture comprising the active substance. If the material for instance consists of an inert substance and a salt as an active substance it is nevertheless said that the material absorbs and desorbs the fluid.

Fluid as used herein denotes a substance that continually flows under an applied shear stress. Fluids include both liquids and gases.

In a first aspect there is provided a method for transferring energy, said method being defined by appended independent claim 1, said method inter alia comprising the steps of:

a. feeding a material comprising an absorbed fluid into a first part of a tube (t), wherein the material has the ability to absorb the fluid at a second temperature and the ability to desorb the absorbed fluid at a higher first temperature, wherein the material is present as particles,

b. heating the tube (t) to at least the higher first temperature so that at least a part of the fluid is desorbed in gas phase from the material, so that a fluid flow is created by the desorbed fluid in the tube (t), causing a flow of the material present as particles, and

c. performing one of

i. separating at least a part of the material from the fluid exiting the tube(t) to obtain material with no or reduced amount of absorbed fluid, and
ii. cooling the material and fluid exiting from the tube(t) so that at least a part of the fluid is absorbed by the material whereby heat is released.

The system is intended to be used so that the material is fed into the tube where it is heated at least to the first temperature so that the fluid is desorbed in gas phase. The gas takes up a considerable volume compared to the material with absorbed fluid. The volume difference is typically several hundred times depending on the pressure and the material. This volume expansion creates a flow of gas, which is mixed with the material. The expanding fluid drives a flow, which drives the transport of the material.

It is not necessary to have other transporting means such as pumps or similar that create the flow of material in the tube. The expanding fluid is sufficient to drive the transport of material. This is an advantage of the invention.

The material is sufficiently finely divided so that the material will follow the gas flow. The material is present as particles. In one embodiment, the particles size is smaller than 10mm, preferably smaller than 5mm, more preferably smaller than 1mm.

The flowing mixture of the material and the fluid in gas phase is in a first alternative separated from the gas in a separator at the end of the tube. This alternative is utilized for instance for energy storage where it is intended that the heat energy is to be released later.

In a second alternative, the flowing mixture of the material and the fluid in gas phase are cooled so that the fluid is again absorbed by the material whereby heat is released. This cooling is made in a heat exchanger. When the mixture of gas and material is cooled and the fluid is absorbed by the material, the volume decreases again so that the movement of the gas will cease or at least decrease. This alternative is utilized where it is desirable to move the heat energy from one place to another place. One example is to move heat energy form a solar collector to a place some distance away where the heat is intended to be used.

The heating of the material so that the fluid desorbs from the material is referred to as charging. Contacting the material with fluid so that it absorbs in the material is referred to as discharging. During discharging heat is released.

Thus, heat can be collected during heating of the tube and stored for a shorter or a longer period. After storage it can be released during discharging. Alternatively, heat can be collected and released again some distance away. The heat is transported utilizing the released fluid in gas phase which creates a flow bringing the material.

In one embodiment the material with no or reduced amount of absorbed fluid from step c-i is contacted with fluid so that the fluid is absorbed by the material and the heat is released. By this step the charged material is discharged so that the heat is released. In one embodiment the material with absorbed fluid is fed into the tube again as a step a). During charging material can be collected in a storage tank and during discharging material can be taken from the storage tank and contacted with fluid so that heat is released. The principle is the same as for other chemical heat pumps. Material form step c-ii which comprises absorbed fluid can be fed to the tube again in step a) so that the process can be continuous.

In one embodiment, turbulence is created inside the tube. This is in one embodiment, made with flanges and/or a spiral inside the tube. Turbulence of the flowing fluid in the tube has the advantage of giving an improved heat exchange between the fluid and the wall of the tube.

In one embodiment, the tube is heated by the sun. One or more reflectors reflecting heat from the sun onto the tube can be used to heat the tube to a suitable temperature.

In one embodiment, the tube is heated by waste heat. The waste heat is in one embodiment waste heat from an industrial process. Any heat can be used for heating the tube as long as the temperature is adapted to the selected material and fluid.

In one embodiment, the tube is heated by electricity. Thereby electricity can be used when the price is low and heat energy can be released when needed. Heating by electricity includes but is not limited to heating with a resistance that is heated by an electrical current and heating with an induction heater.

In one embodiment, the material is fed to the first part of the tube batch wise. In an alternative embodiment, the material is fed to the first part of the tube continuously. The first part of the tube is typically one end of the tube so that the material is fed into one end of the tube.

In one embodiment, a gas is added in the inside of the tube. In one embodiment, $N_2$ is added in the first part of the tube. In one embodiment, the gas affects the temperatures at which the fluid is desorbed from the material and at which the fluid is absorbed by the material. The gas is not added to drive the flow of material but instead to change the chemical composition in the tube. A gas such as $N_2$ affects the temperature at which the fluid is desorbed from the material and at which it is absorbed by the material. Addition of $N_2$ thus gives a further opportunity to control the process.

In one embodiment, the material separated from the fluid is collected in a storage container. Such a storage container is often connected to a hopper below the separator via a valve, which can be opened so that particles can enter the storage container. In one embodiment the storage container can be removed and sealed off for storage and/or for transporting the material to a reactor where they are contacted with fluid. A storage container can in one embodiment be utilized for transporting the material from the reactor to the feeder so that the particles can be fed into the tube again for charging.

In one embodiment there are two systems operating together. The two tubes can then be arranged parallel to each other. In this embodiment, the material is fed to the first part of a first tube and heated so that fluid is desorbed and the material is transported with the flowing fluid to a first separator where the material is separated from the fluid and stored in a first container, where after the material is contacted with fluid so that the fluid is absorbed by the material so that heat is released, where after the material is stored a second container, where after the material is fed to the first part of a second tube and heated so that fluid is desorbed and the material is transported with the flowing fluid to a second separator where the material is separated from the fluid and stored in a third container, where after the material is contacted with the fluid so that the fluid is absorbed by the material so that heat is released, where after the material is stored a fourth container, where after it is fed again to the first part of a first tube so that the process is repeated.

This embodiment is particularly useful when using long straight tubes. Since the tubes can be long, for instance 50-100m long it is practical to arrange two tubes next to each other so that material is transported in both directions during charging and so that the material is stored and discharged at each end of the tube. More than two tubes can also be arranged so that a loop is created. The material is thus heated and charged in the first tube, at the end of the first tube it is stored and then discharged when desired. A second tube starts close to where the first tube ends and when the material is to be charged again it is charged in the second tube. At the end of the second tube there is a similar storage and discharge facility so that the material can be charged again in the first tube.

In a second aspect there is provided a system which is defined by appended independent claim 6, the system inter alia comprising:

a. a material (m) and a fluid, wherein the material has the ability to absorb the fluid at a second temperature and the ability to desorb the absorbed fluid at a higher first temperature, wherein the material is present as particles,

b. a tube (t), wherein the tube is adapted to be heated to at least the higher first temperature, the tube has a cross sectional area, a length, and an inside volume,

c. a feeder (f) arranged to feed the material (m) into a first part of the tube (t), and

d. one of

i. a separator (s) adapted to separate the material from a mixture of the material and a gas exiting from the tube, and
ii. a heat exchanger (he) adapted to cool a mixture of the material and a gas exiting from the tube (t) to a temperature below the first temperature,

wherein the system further comprises that the cross sectional area, the length, and the inside volume of the tube (t) are adapted so that if a predefined amount of the material (m) and a predefined amount of fluid is fed into the tube (t) per time unit, and the tube (t) is heated to at least the first higher temperature so that the fluid is desorbed, then a flow is created in the tube, which flow is capable of transporting the material along the tube at a velocity higher than the saltation velocity.

The tube is adapted to be heated by some kind of heater or heat exchanger in thermal contact with the tube. The heat will then be transferred to the inside of the tube and further to the material in particulate form. In order for the material to be heated to at least the first temperature, the heater or heat exchanger heating the tube should preferably be able to heat to a higher temperature than the first temperature. The tube has a defined length which is from the feeder to either i) the separator or to the ii) heat exchanger depending on the version. The material and the fluid is said to exit the tube(t) where the separator or heat exchanger is. Thus, the system may be made of a very long tube, but the length of the tube (t) is still the length form the feeder to the heat exchanger (he). The tube has further a cross sectional area. This is the area of a cross section in a plane perpendicular to the tube. The cross section is measured for the inside of the tube so that the walls of the tube are not taken into account. The tube has an inside volume, which is a product of the length and the cross sectional area. For a cross sectional area (A) that varies with the position (x) in the tube the volume is the integral of A(x) from x=0 to x=1. The cross sectional area, the length and the inside volume of the tube should be carefully adapted to the volume of released fluid. For a system working in continuous mode, the tube should be adapted to a certain feeding rate, i.e. a predefined amount of material+fluid fed into the tube per time unit. The fluid is typically absorbed in the material before feeding it into the tube, so that the fluid is fed with the material in absorbed form. When the tube is heated above the first temperature, then a certain volume of fluid is released from the material as a gas and this case will create a suitable flow of gas if the dimensions of the tube are adapted to this. The release can continue as the material is transported in the tube provided that the temperature is kept above the first temperature. This flow will drive the transport of material so that other transportation means such as pumps are not necessary. When designing the tube the designer can assume that a defined amount of material + fluid is fed into an end of the tube per time unit, i.e. a defined feeding rate. This allows the designer to select suitable cross sectional area, length and inside volume of the tube. The cross sectional area can vary over the length of the tube to obtain a suitable flow. The appended theoretical calculation will aid the designer to adapt the tube to the desired conditions with respect to the material, the dimensions of the tube and so on so that a suitable flow of material along the tube can be achieved. Dilute phase flow is desired for the pneumatic transport which occurs in the tube.

The system has the property that the material is transported by the stream of gas released from the material without the necessity of pumps or other transport means. This property occurs when the dimensions of the tube (cross section, length, volume) are adapted to the type material and the amount of material fed into the tube. The skilled person can in the light of the description, the example and calculation example, given at the end of this description, determine suitable dimensions for a tube. As a rule of thumb, if an insufficient flow is obtained for a certain tube and a certain material, then more material should be fed into the tube. If sufficient material is fed into the tube and heated, then a flow will occur, which flow can transport the material.

In one embodiment, the heat exchanger in d-ii is combined with a storage (hes) for the material. The material to which the fluid has absorbed is then stored in the storage after release of the heat. In one embodiment, where the heat collecting system comprises a heat exchanger, the heat exchanger comprises a storage compartment for the material. The storage compartment is arranged so that material from the heat exchanger can be stored in the storage compartment. The material is in one embodiment, recycled to the tube for use again.

In one embodiment, the material is stored. The material can be stored both in charged form and in uncharged form. If the material is stored in charged form, i.e. when the fluid is desorbed from the material, an energy storage is provided. When stored in charged form, it should be taken care that the material is not accidentally discharged, for instance if $H_2O$ is used as the fluid, then the storage container should not allow water to enter into the stored material. A storage of uncharged material is utilized for future charge and use. The material can in most embodiments be reused virtually an infinite number of times.

In one embodiment, the tube is essentially straight without turns. This has the advantage that abrasion is minimized. In a curved tube, abrasion may occur during use, at least to some extent and after prolonged use. These problems are to a large extent avoided if a straight tube is used, i.e. without turns. Abrasion can occur for instance in a 90-degree turn or similar, however slight deviations from a perfectly straight tube can be tolerated without significant problems with abrasion. For instance, the tube can turn a few degrees such as 1-5 degrees without too much trouble with abrasion inside the tube.

In one embodiment, the inside of the tube comprises at least one flange. Such a flange will create turbulence and is in one embodiment arranged to create turbulence in at least a part of and in one embodiment, the entire tube. Turbulence inside the tube will give better heat conduction from the walls of the tube to the material inside the tube. It should be kept in mind that too much turbulence may slow down the flow and/or give increased abrasion inside the tube.

In one embodiment, the tube contains at least one spiral. Such a spiral creates turbulence and such a spiral can in one embodiment, be exchanged for a new one if necessary. In one embodiment, the at least one spiral can be removed from the tube. This has the advantage that the tube can be cleaned during maintenance by removing the spiral from the tube and inserting it again in the tube. The spiral will during the removal bring out possible residual material from inside the tube, at least partially.

In one embodiment, the tube is adapted to be heated by the sun. In one embodiment, the heat collecting system comprises at least one reflecting surface configured to reflect sunlight onto the tube. In one embodiment, at least one reflecting surface is at least one curved surface, such as at least one parabolic surface concentrating the solar radiation towards the tube. In one embodiment, the tube is heated by two parabolic surfaces concentrating solar radiation to the tube. By using reflecting surfaces such as mirrors it is possible to reach high temperatures in the tube which often is desired. The construction of the system and the material determines suitable temperatures. As an example a working temperature inside the tube is in the range 300-600°C. By concentrating the solar radiation towards the tube a sufficient power can be achieved. The power of the system is adapted to the flow of material which is fed into the tube. The power of the system can be tuned by using reflecting surfaces of a suitable area to reflect sunlight onto the tube.

The feeder is made so that it takes material and feeds to the first part of the tube, which is typically one end of the tube. The feeder may comprise a storage for material to be fed into the tube. The feeder can be made according to different principles. In one embodiment, the feeder comprises a screw conveyor. Such a screw conveyor will push the material into the tube in one end of the tube. At the same time it should be constructed so that the screw and the material in the screw can withstand a pressure buildup in the tube so that the material and fluid will flow in the desired direction along the tube. This is in one embodiment, ensured by having the screw conveyor full of solid material so that a fluid cannot flow in the wrong direction. In one embodiment, the screw conveyor builds up a pressure in the material. A screw conveyor can function continuously but also batch wise for instance if it is stopped and started.

In one embodiment, the feeder comprises a pressure lock. Such a pressure lock is intended to take in a portion of material into a chamber through a first opening which is then closed. Then the chamber is then pressurized so that the material fed into the tube when a second opening is opened. Such a pressure lock functions batch wise, but several pressure locks can be combined in one embodiment.

In one embodiment, the feeder comprises an injector. Such an injector injects gas at elevated pressure into the tube, whereby solid material and released fluid in gas phase flows along with the stream of gas entering the tube. If an injector is used, the gas flow does not have to be significant, since the flow of gas does not contribute significantly to the flow and transport of material along the tube. The gas injection would only be to add the material to the tube. The flow and transport of material is made essentially by the fluid in gas phase released from the material.

Combinations of at least one selected from a screw conveyor, a pressure lock, and an injector are also encompassed. In one embodiment it is possible to control the rate of material being fed into the tube.

In one embodiment, the feeder is adapted to add a gas into the tube. In one embodiment, the tube is adapted to inject a pressurized gas. The injection of pressurized gas is independent of the feeding method. Gas can be fed into the tube both at the first end near or at the feeder but also along the tube. The injected gas can give advantages such as affecting the temperature at which the fluid desorbs from the material. In one embodiment, $N_2$ is injected which depending on the material used for instance can lower the temperature at which the fluid desorbs from the material.

In one embodiment, the feeder is adapted to exert a counterpressure on matter present in the tube. Thus the feeder gives a certain pressure in the tube in this embodiment.

The heat collecting system comprises either a separator or a heat exchanger so that the material together with fluid in gas phase flows to either a separator or a heat exchanger.

If present, the separator can function according to different principles to separate the material form the gas. The separator separates all or essentially all of the material from the fluid. In one embodiment, the separator separates more than 95wt%, preferably more than 98wt%, more preferably more than 99.5wt% of the material. In one embodiment, the separator is adapted to remove particles with a size of at least 1 $\mu$m. In one embodiment, the separator is adapted to remove particles with a size of at least 0.1 $\mu$m. In one embodiment, the separator comprises a filter. In one embodiment, the separator comprises a ceramic filter. A ceramic filter has the advantage to withstand the high temperatures, which typically are inside the system. In one embodiment, the separator comprises a cyclone. Such a cyclone has the advantage that no filter is necessary. In one embodiment, the separator comprises a hopper adapted to collect separated material. In one embodiment, the hopper is placed underneath the separator so that the material falls down in the hopper by gravity. In one embodiment, the separator comprises a lock adapted to remove separated material from the separator and transfer the separated material into a storage container. Such a lock is suitably combined with a hopper so that the material can be removed from the system under pressure during operation.

In one embodiment, the material comprises at least one selected from the group consisting of a salt and an oxide. In one embodiment, the material comprises at least one selected from the group consisting of MgO and CaO. For all materials, it is conceived that the form including the absorbed fluid is encompassed. For instance for CaO with $H_2O$ as fluid then $Ca(OH)_2$ is included. Similarly for MgO with $H_2O$ as fluid then $Mg(OH)_2$ is included. For a salt together with $H_2O$ as a fluid, then the hydrate or hydrates of the salt are included.

In one embodiment, the fluid is water. In one embodiment, the fluid comprises ammonia. In one embodiment, the fluid comprises at least one alcohol.

In one embodiment, the material comprises at least one selected from the group consisting of chlorides, chlorates, perchlorates, bromides, iodides, carbonates, and nitrates of lithium, magnesium, calcium, strontium, barium, cobalt, nickel, iron, zinc, manganese, potassium, and aluminium as well as sulphides and hydroxides of lithium, sodium and potassium.

In one embodiment, the material comprises at least one selected from the group consisting of $Na_2S$, LiBr, LiCl, $CaCl_2$, and $CaBr_2$.

In one embodiment, the material comprises fibres. In one embodiment, the fibres are inert with respect to absorption and desorption of the fluid. The fibers have the advantage of providing more solid particles which are more resistance to wear during use in repeated cycles.

The material is present as particles. In one embodiment, each particle is surrounded by an outer coating, said outer coating comprising hydrophobic smaller particles, wherein the hydrophobic smaller particles have an average size from 1 to 100 nm. In one embodiment, the hydrophobic smaller particles (nanoparticles) comprise $SiO_2$, and are modified by bound hydrophobic compounds. The hydrophobic smaller particles are in general inert with respect to absorption and desorption of the fluid. It is an advantage that hydrophobic nanoparticles will act as a lubricant so that the particles are easier to transport and handle, for instance in a feeder, in the tube and in a storage container. The material inside such particles, a salt or an oxide, remains inside the particles under all circumstances. It remains there both together with the fluid and without fluid. Even if a salt hydrate becomes liquid the liquid will be inside the particles so that the particles can be handled like a powder.

In one embodiment, the material comprises at least one selected from the group consisting of graphite, graphene oxide and graphene. Such substances have the advantage of improving the heat conduction. The lubricating properties of such compounds are also good.

In one embodiment, the material is present as particles and at least one selected from graphite and graphene is present in the particles in at least one selected from an outer shell of each particle and an interior of each particle. If present in the outer shell they contribute to the lubrication when the particles are handled and moved. Regardless if positioned in the outer shell or in the interior of the particles, the graphite and/or graphene improves the heat conduction.

In one embodiment, the heat collecting system comprises at least a first and a second set of tube, feeder and separator, and further comprising at least a first and a second discharger adapted to let fluid be absorbed in the material, wherein all components are arranged so that the material exiting from the first separator can enter the first discharger, material exiting from the first discharger can be fed into the second tube, material exiting from the second separator can enter the second discharger, wherein material exiting from the second discharger is adapted to be fed into the first tube. In one embodiment, the first and second dischargers comprise a storage for the material. The material can then be stored until it should be discharged. This system minimizes the need for an active transport the material by using pumps, and other transporters, in particular if long straight tubes are used.

In one embodiment, the heat collecting system comprises at least one condenser adapted to cool the fluid in gas phase so that it becomes liquid. In the condenser, the fluid in gas phase in condensed at least partially to liquid phase. This decreases the volume of the gas so that the pressure is reduced. This reduction in pressure helps to drive the flow of material and gas through the system.

In one embodiment, the heat collecting system comprises a separator and wherein the at least one condenser is arranged after the separator. The word "after" is used in a relative sense relating to the direction of the flow of gas and material.

All the described alternative embodiments above or parts of an embodiment can be freely combined without departing from the inventive idea as long as the combination is not contradictory.

Other features and uses of the invention and their associated advantages will be evident to a person skilled in the art upon reading the description and the examples.

It is to be understood that this invention is not limited to the particular embodiments shown here. The embodiments are provided for illustrative purposes and are not intended to limit the scope of the invention since the scope of the present invention is limited only by the appended claims.

Example

A 2 m long steel tube was partially filled in one end with nano coated calcium hydroxide $Ca(OH)_2$ in powder form. The diameter of the tube was 1.2 cm. The material comprised $Ca(OH)_2$ as particles where the particles were surrounded by hydrophobic nanoparticles (1-100nm) which are hydrophobically modified particles comprising $SiO_2$. The nanoparticles entirely covered the surface of the $Ca(OH)_2$. The average diameter of the particles is 80pm. This measure includes both the core comprising $Ca(OH)_2$/CaO and the outer coating comprising the hydrophobic nanoparticles.

The setup was as depicted in figure 3. In one end of the tube there was a ball valve which was closed after filling. The tube was heated with an induction heater, which was moved back and forth along the tube so that the entire tube reached the desired temperature. The entire or almost entire tube should preferably be so warm that no condensation occurs on the inside walls of the tube. At about 510-550 °C the $Ca(OH)_2$ decomposes into CaO and $H_2O$. The nano coated particles remained as particles with CaO inside and the water in gas phase escaped from the particles. The hydrophobic nanoparticles remain as an outer coating. When the temperature of the tube exceeded a certain value a flow occurred. The flow comprised particles where the $Ca(OH)_2$ had reacted to CaO. A small fraction of $Ca(OH)_2$ may still be in the particles in particular if the $Ca(OH)_2$ did not react fast enough.

In this experiment the tube ended in ambient air. At the open end of the tube solid particles were observed as they were shot out of the tube. It can thus be concluded that the water vapor applies enough pressure to overcome the pressure resistance in the tube.

In the example the material comprising the absorbed fluid is $Ca(OH)_2$. $H_2O$ is the fluid. When the fluid is desorbed the material becomes CaO.

Theoretical calculation

In a pneumatic conveying system, the gas conveying velocity below which the solids being conveyed starts to settle at the bottom of a horizontal tube is the saltation velocity. In order to be able to convey in a dilute phase of bulk solids, the minimum air conveying velocity in all parts of the line must be higher than the saltation velocity. The transport in the tube according to the invention can be considered to be pneumatic transport.

Using Risk's correlation, it is possible to calculate the velocity of saltation $U_{salt} \left[ \frac{m}{s} \right]$. Below this velocity the flow regime is insufficient to maintain the solid in suspension and the solid begins to settle. This value marks the threshold between dilute phase flow and dense phase flow in pneumatic transport.

$$U_{salt} = \left[ \frac{4M_p 10^\alpha g^{\frac{\beta}{2}} D_{pipe}^{\frac{\beta}{2}-2}}{\pi \rho_f} \right]^{\frac{1}{\beta+1}}$$

Where:

$M_p \left[ \frac{kg}{s} \right]$ is the solid mass flow rate.

$D_{pipe}$ [m] is the diameter of the tube. $D_{pipe} = 0.012$ [m]

$\rho_f \left[ \frac{kg}{m^3} \right]$ is the density of the gas. It is assumed that the temperature of the gas is 100 °C and the vapor is in saturated condition. Therefore $\rho_f = 0.5897 \left[ \frac{kg}{m^3} \right]$.

$$\alpha = 1140 d_{solid} + 1.96$$

$$\beta = 1100 d_{solid} + 2.5$$

$d_{solid}$ [$m$] is the diameter of the solid particles. The average diameter of the particles is 80 $\mu$m.

The pressure drop along the tube can be calculated as:

$$\Delta p_H[Pa] = \frac{\rho_f \varepsilon_H U_{fH}^2}{2} + \frac{\rho_p (1 - \varepsilon_H) U_{pH}^2}{2} + \frac{2 f_g \rho_f U^2 L_{pipe}}{D_{pipe}} + \frac{2 f_p \rho_p (1 - \varepsilon_H) U_{pH}^2 L_{pipe}}{D_{pipe}}$$

Where:

$\frac{\rho_f \varepsilon_H U_{fH}^2}{2}$ represents the gas acceleration

$\frac{\rho_p (1 - \varepsilon_H) U_{pH}^2}{2}$ represents the solid acceleration

$\frac{2 f_g \rho_f U^2 L_{pipe}}{D_{pipe}}$ represents the gas friction

$\frac{2 f_p \rho_p (1 - \varepsilon_H) U_{pH}^2 L_{pipe}}{D_{pipe}}$ represents the solid friction

$$L_{pipe} = 2 \ [m]$$

$\rho_p \left[\frac{kg}{m^3}\right]$ is the density of the solid $(CaO)$ . $\rho_p = 733 \left[\frac{kg}{m^3}\right]$ .

$\varepsilon_{H}$ [-] is the granule porosity or voidage.

$G \left[\frac{kg}{m^2 s}\right]$ is the solid mass flux

$$G = \frac{M_p}{A} \left[\frac{kg}{m^2 s}\right]$$

$$G = \rho_p (1 - \varepsilon_H) U_{pH} \left[\frac{kg}{m^2 s}\right]$$

$A$ [$m^2$] is the area of the tube

$$A - \frac{\pi}{4} D_{pipe}^2 [m^2]$$

$U \left[\frac{m}{s}\right]$ is the superficial velocity of the gas. For reasonable safety margin, $U = 1.5 \ U_{salt} \left[\frac{m}{s}\right]$ .

$U_{fH} \left[\frac{m}{s}\right]$ is the interstitial gas velocity in horizontal tube.

$U_{pH} \left[\frac{m}{s}\right]$ is the actual solids velocity in horizontal tube.

$$U_{pH} = U \left(1 - 0.0638 d_{solid}^{0.3} \rho_p^{0.5}\right)$$

$f_p$ [-] is the solid friction factor:

$$f_p = \frac{3}{8}\frac{\rho_f}{\rho_p} C_D \frac{D_{pipe}}{d_{solid}} \left[\frac{U_{fH} - U_{pH}}{U_{pH}}\right]$$

$C_D$ [-] is defined by (Table 1) :

Table 1 Reynolds regimes

| $Re_p < 1$ | $C_D = \dfrac{24}{Re_p}$ |
|---|---|
| $1 < Re_p < 500$ | $C_D = 18.5Re_p^{-0.6}$ |
| $500 < Re_p < 2 \cdot 10^5$ | $C_D = 0.44$ |

$Re_p$ [-] is defined by:

$$Re_p = \frac{\rho_f\left[U_{fH} - U_{pH}\right]d_{solid}}{\mu_f} \; [-]$$

$\mu_f \left[\frac{ks}{ms}\right]$ is the viscosity. It has been assumed that the temperature of the gas is 100 °C and the vapor is in saturated conditions. Therefore $\mu_f = 0.00001227 \left[\frac{ks}{ms}\right]$

$f_g$[-] is the gas friction factor and it is defined by Blasius correlation:

$$f_g = 0.079Re_f^{-0.25}[-]$$

$Re_f$[-] is the Reynolds number based on the superficial gas velocity:

$$Re_f = \frac{\rho_f U_{fH} D_{pipe}}{\mu_f}[-]$$

The results are shown in figure 6. In Figure 6 the minimum pressure $\Delta p_H$ which the water vapor needs to apply is plotted against the mass flow rate Mp. The water vapor needs to apply a pressure that is at least higher than $\Delta p_H$ (above the line).

**Claims**

1. A method for transferring energy, said method comprising the steps of:

   a. feeding a material (m) comprising an absorbed fluid into a first part of a tube (t) at a defined rate, wherein the material (m) has the ability to absorb the fluid at a second temperature and the ability to desorb the absorbed fluid at a higher first temperature, wherein the material (m) is present as particles,
   b. heating the tube (t) to at least the higher first temperature so that at least a part of the fluid is desorbed in gas phase from the material (m), wherein a fluid flow is created by the desorbed fluid in the tube (t), causing a flow of the material (m) present as particles, wherein the cross sectional area (A) of the tube (t), the length ($L_{pipe}$) of the tube (t), and the inside volume of the tube (t) are adapted to the defined feeding rate of the amount

12

of material (m) comprising absorbed fluid, which is fed into the first part of the tube (t), wherein the fluid flow in the entire tube (t) has a velocity higher than the saltation velocity ($u_{salt}$) and

c. performing one of

   i. separating at least a part of the material (m) from the fluid exiting the tube (t) to obtain material (m) with no or reduced amount of absorbed fluid, and
   ii. cooling the material (m) and fluid exiting from the tube (t) so that at least a part of the fluid is absorbed by the material (m) whereby heat is released.

2. The method according to claim 1, wherein material (m) with no or reduced amount of absorbed fluid from step c-i, is contacted with the fluid so that the fluid is absorbed by the material (m) so that heat is released.

3. The method according to claim 2, wherein the material (m) with absorbed fluid is fed into the tube (t) again.

4. The method according to any one of claims 1-3, wherein turbulence is created inside the tube (t) by the shape of the inside surface of the tube (t).

5. The method according to any one of claims 1-4, wherein the material (m) is fed to the first part of a first tube and heated so that fluid is desorbed and the material (m) is transported with the flowing fluid to a first separator where the material (m) is separated from the fluid and stored in a first container, where after the material (m) is contacted with the fluid so that the fluid is absorbed by the material (m) so that heat is released, where after the material (m) is stored in a second container, where after the material (m) is fed to the first part of a second tube and heated so that fluid is desorbed and the material (m) is transported with the flowing fluid to a second separator where the material (m) is separated from the fluid and stored in a third container, where after the material (m) is contacted with the fluid so that the fluid is absorbed by the material (m) so that heat is released, where after the material (m) is stored in a fourth container, where after it is fed again to the first part of the first tube so that the process is repeated.

6. A system comprising:

   a. a material (m) and a fluid, wherein the material (m) has the ability to absorb the fluid at a second temperature and the ability to desorb the absorbed fluid at a higher first temperature, wherein the material (m) is present as particles,
   b. a tube (t), wherein the tube is adapted to be heated to at least the higher first temperature, the tube has a cross sectional area (A), a length ($L_{pipe}$), and an inside volume,
   c. a feeder (f) arranged to feed the material (m) into a first part of the tube (t), and
   d. one of

   i. a separator (s) adapted to separate the material (m) from a mixture of the material (m) and a gas exiting from the tube, and
   ii. a heat exchanger (he) adapted to cool a mixture of the material (m) and a gas exiting from the tube (t) to a temperature below the first temperature,

   the system being **characterized in that** the cross sectional area (A), the length ($L_{pipe}$), and the inside volume of the tube (t) are adapted so that if a predefined amount of the material (m) and a predefined amount of fluid is fed into the tube (t) per time unit, and the tube (t) is heated to at least the first higher temperature so that the fluid is desorbed, then a flow is created in the tube(t), which flow is capable of transporting the material along the tube(t), and has a velocity higher than the saltation velocity ($u_{salt}$) in the entire tube (t) .

7. The system according to claim 6, wherein the tube (t) is essentially straight without turns.

8. The system according to any one of claims 6-7, wherein the tube (t) contains at least one spiral and wherein the at least one spiral can be removed from the tube (t) .

9. The system according to any one of claims 6-8, wherein the feeder (f) comprises a screw conveyor.

10. The system according to any one of claims 6-9, wherein the feeder (f) comprises a pressure lock.

11. The system according to any one of claims 6-10, wherein the feeder (f) comprises an injector.

**12.** The system according to any one of claims 6-11, wherein the system comprises a separator (s), and wherein the separator (s) comprises a filter.

**13.** The system according to any one of claims 6-12, wherein the system comprises a separator (s), and wherein the separator (s) comprises a cyclone.

**14.** The system according to any one of claims 6-13, wherein the system comprises a separator (s), and wherein the separator (s) comprises a lock (1) adapted to remove separated material (m) from the separator (s) and transfer the separated material (m) into a storage container (s).

**15.** The system according to any one of claims 6-14, comprising at least a first and a second set of tube (t), feeder (f) and separator (s) respectively, and further comprising at least a first and a second discharger adapted to let fluid be absorbed in the material (m), wherein all components are arranged so that the material (m) exiting from the first separator can enter the first discharger, material (m) exiting from the first discharger can be fed into the second tube (t), material (m) exiting from the second separator can enter the second discharger, material (m) exiting from the second discharger can be fed into the first tube (t), and material (m) exiting the first tube (t) can reach the first separator.


**Patentansprüche**

**1.** Verfahren zum Übertragen von Energie, wobei das Verfahren die folgenden Schritte umfasst:

a. Zuführen eines Materials (m), das ein absorbiertes Fluid umfasst, in einen ersten Teil eines Rohrs (t) mit einer definierten Rate, wobei das Material (m) die Fähigkeit aufweist, das Fluid bei einer zweiten Temperatur zu absorbieren und die Fähigkeit, das absorbierte Fluid bei einer höheren ersten Temperatur zu desorbieren, wobei das Material (m) als Partikel vorhanden ist,
b. Erhitzen des Rohrs (t) zumindest auf die höhere erste Temperatur, so dass zumindest ein Teil des Fluids in Gasphase aus dem Material (m) desorbiert wird, wobei in dem Rohr (t) ein Fluidfluss durch das desorbierte Fluid erzeugt wird, der einen Fluss des Materials (m), das als Partikel vorhanden ist, verursacht, wobei die Querschnittsfläche (A) des Rohrs (t), die Länge ($L_{pipe}$) des Rohrs (t) und das Innenvolumen des Rohrs (t) auf die definierte Zuführrate der Menge an Material (m), das absorbiertes Fluid umfasst, angepasst ist, das dem ersten Teil des Rohrs (t) zugeführt wird, wobei der Fluidfluss in dem gesamten Rohr (t) eine Geschwindigkeit hat, die höher ist als die Saltationsgeschwindigkeit ($u_{salt}$), und
c. Durchführen eines der folgenden Schritte:

i. Abtrennen zumindest eines Teils des Materials (m) von dem Fluid, das aus dem Rohr (t) austritt, um Material (m) ohne absorbiertes Fluid oder mit einer reduzierten Menge von absorbiertem Fluid zu erhalten, und
ii. Kühlen des Materials (m) und des Fluids, die aus dem Rohr (t) austreten, so dass zumindest ein Teil des Fluids durch das Material (m) absorbiert wird, wobei Wärme freigesetzt wird.

**2.** Verfahren nach Anspruch 1, wobei Material (m) ohne oder mit einer reduzierten Menge von absorbiertem Fluid aus Schritt c-i mit dem Fluid in Kontakt gebracht wird, so dass das Fluid durch das Material (m) absorbiert wird, so das Wärme freigesetzt wird.

**3.** Verfahren nach Anspruch 2, wobei das Material (m) mit absorbiertem Fluid wieder dem Rohr (t) zugeführt wird.

**4.** Verfahren nach einem der Ansprüche 1-3, wobei im Inneren des Rohrs (t) durch die Form der Innenfläche des Rohrs (t) eine Turbulenz erzeugt wird.

**5.** Verfahren nach einem der Ansprüche 1-4, wobei das Material (m) dem ersten Teil eines ersten Rohrs zugeführt wird und erwärmt wird, so dass Fluid desorbiert wird und das Material (m) mit dem fließenden Fluid zu einem ersten Separator transportiert wird, in dem das Material (m) von dem Fluid getrennt wird und in einem ersten Behälter gespeichert wird, woraufhin das Material (m) mit dem Fluid in Kontakt gebracht wird, so dass das Fluid durch das Material (m) absorbiert wird, so dass Wärme freigesetzt wird, woraufhin das Material (m) in einem zweiten Behälter gespeichert wird, woraufhin das Material (m) dem ersten Teil eines zweiten Rohrs zugeführt wird und erwärmt wird, so dass Fluid desorbiert wird und das Material (m) mit dem fließenden Fluid zu einem zweiten Separator transportiert wird, in dem das Material (m) von dem Fluid abgetrennt wird und in einem dritten Behälter gespeichert wird, woraufhin das Material (m) mit dem Fluid in Kontakt gebracht wird, so dass das Fluid durch das Material (m) absorbiert wird, so dass Wärme freigesetzt wird, woraufhin das Material (m) in einem vierten Behälter gespeichert wird, wobei es danach wieder dem ersten Teil des ersten Rohrs zugeführt wird, so dass der Prozess wiederholt wird.

6. System, das Folgendes umfasst:

a. ein Material (m) und ein Fluid, wobei das Material (m) die Fähigkeit, das Fluid bei einer zweiten Temperatur zu absorbieren, und die Fähigkeit das absorbierte Fluid bei einer höheren ersten Temperatur zu desorbieren, aufweist, wobei das Material (m) als Partikel vorhanden ist,

b. ein Rohr (t), wobei das Rohr dafür ausgelegt ist, zumindest auf die höhere erste Temperatur erhitzt zu werden, das Rohr eine Querschnittsfläche (A), eine Länge ($L_{pipe}$) und ein Innenvolumen aufweist,

c. eine Zuführungsvorrichtung (f), die angeordnet ist, um das Material (m) einem ersten Teil des Rohrs (t) zuzuführen, und

d. einen von

i. einem Separator (s), der dafür ausgelegt ist, das Material (m) aus einer Mischung des Materials (m) und eines Gases, die aus dem Rohr austritt, abzutrennen, und

ii. einem Wärmetauscher (he), der dafür ausgelegt ist, eine Mischung aus dem Material (m) und einem Gas, die aus dem Rohr (t) austritt, auf eine Temperatur unterhalb der ersten Temperatur zu kühlen,

wobei das System **dadurch gekennzeichnet ist, dass** die Querschnittsfläche (A), die Länge ($L_{pipe}$) und das Innenvolumen des Rohrs (t) derart ausgelegt sind, dass dann, wenn dem Rohr (t) eine vordefinierte Menge des Materials (m) und eine vordefinierte Menge des Fluids pro Zeiteinheit zugeführt worden ist, und das Rohr (t) zumindest auf die erste höhere Temperatur erhitzt worden ist, so dass das Fluid desorbiert wird, in dem Rohr (t) ein Fluss erzeugt wird, wobei der Fluss in der Lage ist, das Material entlang des Rohrs (t) zu transportieren, und eine Geschwindigkeit aufweist, die in dem gesamten Rohr (t) höher ist als die Saltationsgeschwindigkeit ($u_{salt}$).

7. System nach Anspruch 6, wobei das Rohr (t) im Wesentlichen gerade ohne Windungen ist.

8. System nach einem der Ansprüche 6-7, wobei das Rohr (t) mindestens eine Spirale enthält und wobei die mindestens eine Spirale von dem Rohr (t) entfernt werden kann.

9. System nach einem der Ansprüche 6-8, wobei die Zuführungsvorrichtung (f) einen Schneckenförderer umfasst.

10. System nach einem der Ansprüche 6-9, wobei die Zuführungsvorrichtung (f) eine Druckschleuse umfasst.

11. System nach einem der Ansprüche 6-10, wobei die Zuführungsvorrichtung (f) einen Injektor umfasst.

12. System nach einem der Ansprüche 6-11, wobei das System einen Separator (s) umfasst, und wobei der Separator (s) einen Filter umfasst.

13. System nach einem der Ansprüche 6-12, wobei das System einen Separator (s) umfasst, und wobei der Separator (s) einen Fliehkraftabscheider umfasst.

14. System nach einem der Ansprüche 6-13, wobei das System einen Separator (s) umfasst, und wobei der Separator (s) eine Schleuse (1) umfasst, die dafür ausgelegt ist, abgetrenntes Material (m) aus dem Separator (s) zu entfernen und das abgetrennte Material (m) in einen Aufbewahrungsbehälter (s) zu übertragen.

15. System nach einem der Ansprüche 6-14, das zumindest einen ersten bzw. einen zweiten Satz von Rohr (t), Zuführungsvorrichtung (f) und Separator (s) umfasst, und ferner zumindest eine erste und eine zweite Auslassvorrichtung umfasst, die derart ausgelegt sind, dass Fluid in dem Material (m) absorbiert werden kann, wobei alle Komponenten derart angeordnet sind, dass das Material (m), das aus dem ersten Separator austritt, in die ersten Auslassvorrichtung eindringen kann, Material (m), das aus der ersten Auslassvorrichtung austritt, in das zweite Rohr (t) eindringen kann, Material (m), das aus dem zweiten Separator austritt, in die zweite Auslassvorrichtung eindringen kann, Material (m), das aus der zweiten Auslassvorrichtung austritt, dem ersten Rohr (t) zugeführt werden kann, und Material (m), das aus dem ersten Rohr (t) austritt, den ersten Separator erreichen kann.

**Revendications**

1. Procédé de transfert d'énergie, ledit procédé comprenant les étapes consistant à :

   a. introduire un matériau (m) comprenant un fluide absorbé dans une première partie d'un tube (t) à une vitesse définie, dans lequel le matériau (m) présente la capacité d'absorber le fluide à une deuxième température et la capacité de désorber le fluide absorbé à une première température plus élevée, dans lequel le matériau (m) est présent sous forme de particules,
   b. chauffer le tube (t) à au moins la première température plus élevée de sorte qu'au moins une partie du fluide soit désorbée en une phase gazeuse du matériau (m),
   dans lequel un écoulement de fluide est créé par le fluide désorbé dans le tube (t), provoquant un flux du matériau (m) présent sous forme de particules, dans lequel la section transversale (A) du tube (t), la longueur ($L_{tuyau}$) du tube (t), et le volume intérieur du tube (t) sont adaptés à la vitesse d'introduction définie de la quantité de matériau (m) comprenant le fluide absorbé, qui est introduit dans la première partie du tube (t), dans lequel l'écoulement de fluide dans l'ensemble du tube (t) présente une vitesse supérieure à la vitesse de saltation ($u_{salt}$) et
   c. réaliser un parmi
   i. la séparation d'au moins une partie du matériau (m) du fluide sortant du tube (t) pour obtenir un matériau (m) sans ou avec une quantité réduite de fluide absorbé, et
   ii. le refroidissement du matériau (m) et du fluide sortant du tube (t) de sorte qu'au moins une partie du fluide soit absorbée par le matériau (m), selon lequel de la chaleur est dégagée.

2. Procédé selon la revendication 1, dans lequel le matériau (m) sans ou avec une quantité réduite de fluide absorbé de l'étape c-i, est mis en contact avec le fluide de sorte que le fluide soit absorbé par le matériau (m) de sorte que de la chaleur soit dégagée.

3. Procédé selon la revendication 2, dans lequel le matériau (m) avec du fluide absorbé est de nouveau introduit dans le tube (t).

4. Procédé selon l'une quelconque des revendications 1-3, dans lequel une turbulence est créée à l'intérieur du tube (t) par la forme de la surface intérieure du tube (t).

5. Procédé selon l'une quelconque des revendications 1-4, dans lequel le matériau (m) est introduit dans la première partie d'un premier tube et chauffé de sorte que du fluide soit désorbé et que le matériau (m) soit transporté avec le fluide en circulation vers un premier séparateur où le matériau (m) est séparé du fluide et stocké dans un premier contenant, après quoi le matériau (m) est mis en contact avec le fluide de sorte que le fluide soit absorbé par le matériau (m) de sorte que la chaleur soit dégagée, après quoi le matériau (m) est stocké dans un deuxième contenant, après quoi le matériau (m) est introduit dans la première partie d'un deuxième tube et chauffé de sorte que du fluide soit désorbé et que le matériau (m) soit transporté avec le fluide en circulation vers un deuxième séparateur où le matériau (m) est séparé du fluide et stocké dans un troisième contenant, après quoi le matériau (m) est mis en contact avec le fluide de sorte que le fluide soit absorbé par le matériau (m) de sorte que de chaleur soit dégagée, après quoi le matériau (m) est stocké dans un quatrième contenant, après quoi il est de nouveau introduit dans la première partie du premier tube de sorte que le processus soit répété.

6. Système comprenant :

   a. un matériau (m) et un fluide, dans lequel le matériau (m) présente la capacité d'absorber le fluide à une deuxième température et la capacité de désorber le fluide absorbé à une première température plus élevée, dans lequel le matériau (m) est présent sous forme de particules,
   b. un tube (t), dans lequel le tube est conçu pour être chauffé à au moins la première température plus élevée, le tube présente une section transversale (A), une longueur ($L_{tuyau}$) et un volume intérieur,
   c. un dispositif d'introduction (f) agencé pour introduire le matériau (m) dans une première partie du tube (t), et
   d. un parmi

   i. un séparateur (s) conçu pour séparer le matériau (m) d'un mélange du matériau (m) et d'un gaz sortant du tube, et
   ii. un échangeur de chaleur (he) conçu pour refroidir un mélange du matériau (m) et d'un gaz sortant du tube (t) à une température inférieure à la première température,

16

le système étant **caractérisé en ce que** la section transversale (A), la longueur ($L_{tuyau}$) et le volume intérieur du tube (t) sont adaptés de sorte que si une quantité prédéfinie du matériau (m) et une quantité prédéfinie de fluide sont introduites dans le tube (t) par unité de temps, et le tube (t) est chauffé à au moins la première température plus élevée de sorte que le fluide soit désorbé, alors un écoulement est créé dans le tube (t), lequel écoulement est apte à transporter le matériau le long du tube (t), et présente une vitesse supérieure à la vitesse de saltation ($u_{salt}$) dans l'ensemble du tube (t).

7. Système selon la revendication 6, dans lequel le tube (t) est sensiblement droit sans coudes.

8. Système selon l'une quelconque des revendications 6-7, dans lequel le tube (t) contient au moins une spirale et dans lequel l'au moins une spirale peut-être retirée du tube (t).

9. Système selon l'une quelconque des revendications 6-8, dans lequel le dispositif d'introduction (f) comprend un transporteur à vis.

10. Système selon l'une quelconque des revendications 6-9, dans lequel le dispositif d'introduction (f) comprend un élément de blocage à pression.

11. Système selon l'une quelconque des revendications 6-10, dans lequel le dispositif d'introduction (f) comprend un injecteur.

12. Système selon l'une quelconque des revendications 6-11, dans lequel le système comprend un séparateur (s), et dans lequel le séparateur (s) comprend un filtre.

13. Système selon l'une quelconque des revendications 6-12, dans lequel le système comprend un séparateur (s) et dans lequel le séparateur (s) comprend un hydrocyclone.

14. Système selon l'une quelconque des revendications 6-13, dans lequel le système comprend un séparateur (s), et dans lequel le séparateur (s) comprend un élément de blocage (l) conçu pour retirer le matériau (m) séparé du séparateur (s) et transférer le matériau (m) séparé dans un contenant de stockage (s).

15. Système selon l'une quelconque des revendications 6-14, comprenant au moins des premier et deuxième ensembles de tube (t), dispositif d'introduction (f) et séparateur (s) respectivement, et comprenant en outre au moins des premier et deuxième dispositifs d'évacuation conçus pour laisser le fluide être absorbé dans le matériau (m), dans lequel tous les composants sont agencés de sorte que le matériau (m) sortant du premier séparateur puisse entrer dans le premier dispositif d'évacuation, le matériau (m) sortant du premier dispositif d'évacuation puisse être introduit dans le deuxième tube (t), le matériau (m) sortant du deuxième séparateur puisse entrer dans le deuxième dispositif d'évacuation, le matériau (m) sortant du deuxième dispositif d'évacuation puisse être introduit dans le premier tube (t) et le matériau (m) sortant du premier tube (t) puisse atteindre le premier séparateur.

Fig 1

Fig 2

$L_{pipe}$

1

2 $D_{pipe}$

4

3

Fig 3

Fig 4

$H_2O_{(v)}$

$CaO_{(s)}$

$Ca(OH)_{2(s)}$

Fig 5

Pressure drop along the pipe

Fig 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2530298 A1
- WO 2007139476 A
- WO 2012118437 A
- WO 2016166364 A
- US 3908632 A
- US 20140338372 A